# EUROPÄISCHE PATENTSCHRIFT

(11) **EP 2 700 835 B1**
(45) Veröffentlichungstag und Bekanntmachung des Hinweises auf die Patenterteilung: **17.10.2018**
(21) Anmeldenummer: 13004088.4
(22) Anmeldetag: 16.08.2013
(51) Int. Cl.: F16D 3/68, F16D 3/76

(54) **Elastische Kupplung**
Elastic coupling
Couplage électrique

(30) Priorität: 21.08.2012 DE 102012016581
(43) Veröffentlichungstag der Anmeldung: 26.02.2014
(73) Patentinhaber: Dipl.-Ing. Herwarth Reich GmbH, 44807 Bochum (DE)
(72) Erfinder: Glembin, Wolfgang, 44801 Bochum (DE)
(74) Vertreter: Grosse, Wolf-Dietrich Rüdiger

(56) Entgegenhaltungen:
- EP-A1- 1 482 213
- DE-A1-102011 003 530
- DE-B1- 1 525 365
- JP-A- 2010 124 620
- US-A1- 2011 240 399

## Beschreibung

Die Erfindung betrifft eine elastische Kupplung, umfassend einen vorzugsweise als Flanschanschluss ausgebildeten metallischen Außenring und einen vorzugsweise als Anschraubflansch ausgebildeten, nabenartigen metallischen Innenring, wobei ein konzentrisch auf dem Innenring angeordnetes elastisches Drehmomentübertragungsmittel mit zahnartigen Radialvorsprüngen in die Flanken der zahnartigen Radialvorsprünge mit ihren Endwänden einschließende Innentaschen des Außenrings eingreift. Der Außenring ist dabei vorzugsweise als Flachanschluss und der Innenring als Steck- oder Anschraubflansch ausgebildet.

Eine elastische Kupplung mit einem zwischen einem Innenring und einem Außenring angeordneten elastischen Glied ist durch das DE 83 24 234.1 U1 bekannt geworden. Solche Kupplungen kommen beispielsweise im Nutzfahrbereich zum Einsatz, vorzugsweise für Dieselmotoren und dort ausgeführt als Anflansch- bzw. Flanschkupplung, z.B. eingebaut zwischen dem Dieselmotor und einer Hydraulikpumpe oder einem Generator. Der Innenring wird üblich auf die Antriebswelle einer Arbeitsmaschine festgesetzt, während der Außenring der Antriebsseite einer Kraftmaschine zugeordnet ist. Der Außenring kann mit einem Kupplungsflansch in Verbindung stehen oder sogleich selbst diesen Kupplungsflansch bilden. Die den Innen- und den Außenring miteinander verbindende elastische Drehmomentübertragungsscheibe überträgt die Antriebskräfte von der Antriebs- auf die Abtriebsseite und gewährleistet eine gewisse Verdrehung zwischen dem Innen- und dem Außenring.

Eine weitere elastische Kupplung ist z.B. aus DE 10 2011 003 530 A1 bekannt. Der Erfindung liegt die Aufgabe zugrunde, eine Kupplung der eingangs genannten Art kompakter und mit verbesserter Betriebssicherheit zu schaffen.

Diese Aufgabe wird erfindungsgemäß dadurch gelöst, dass der Innenring als Flügelnabenring mit mindestens zwei in Umfangsrichtung voneinander beabstandeten, das elastische Drehmomentübertragungsmittel in Segmente unterteilenden Mitnehmerstegen ausgebildet ist, die in gegenüber den Innentaschen der zahnartigen Radialvorsprünge in Umfangsrichtung mit einem größeren Kammermaß vorgesehene Mitnehmerstegtaschen hineinragen und bei unbelasteter Kupplung eine von den Endwänden bzw. Taschenendwänden der Mitnehmerstegtaschen entfernte Position einnehmen, wobei den Mitnehmerstegen elastische, in den Dreh-Endlagen zur Wirkung kommende, nockenartige Puffermittel zugeordnet sind..

Es lässt sich damit eine hochelastische, axial steckbare Kupplung mit integrierter Durchdrehsicherung erreichen, bei der erfindungsgemäß in einer ersten Variante die Mitnehmerstege bzw. Flügel zumindest an ihren radial äußeren Enden mit einem elastischen Nocken versehen sind oder in einer zweiten Varitane die elastischen Nocken in den die Mitnehmerstegtaschen in Umfangsrichtung begrenzenden Taschenendwänden vorgesehen sind. Denn während im unteren Belastungsbereich bzw. im Leerlauf nur das elastische Drehmomentübertragungsmittel, vorzugsweise ausgebildet als Drehmomentübertragungsscheibe, mit seinen zahnartigen Radialvorsprüngen wirksam ist, kommen bei voller Last bzw. Leistung sowie auch bei Überlast entweder die Nocken der Mitnehmerstege des getriebenen Kupplungsteils, d.h. des Innenrings an den ihnen in Drehrichtung zugewandten Endwänden der Mitnehmerstegtaschen oder die optional nockenlosen Mitnehmerstege kommen an den Nocken in den Taschenendwänden zur Anlage.

Durch das Einbeziehen der Nocken an der Übertragungsfähigkeit der Kupplung wird diese nicht nur kompakter, sondern bei Überlastung wird die Torsionsbeanspruchung der Drehmomentübertragungsscheibe verhindert und eine Durchdrehsicherung gewährleistet. Die Kupplung lässt sich sowohl in symmetrischer Ausführung, d.h. mit Wirkungsweise für beide Drehrichtungen, als auch in asymmetrischer Ausführung, d.h. Drehrichtung entweder nach links oder nach rechts, betreiben.

Eine vorteilhafte Ausführung der Erfindung sieht vor, dass zwischen den Nocken und der in Drehrichtung liegenden Endwand der Mitnehmerstegtaschen bzw. zwischen den Nocken in den Taschenendwänden und den Mitnehmerstegen ein erster Verdrehwinkel ausgebildet ist, wobei die Nocken zur Übertragung der vollen Antriebsleistung nach zurückgelegtem Verdrehwinkel gegen die Endwände bzw. die Mitnehmerstege gegen die Nocken anschlagen und in dieser Anschlaglage bei auftretender Überlast die Verformung der Nocken einen zweiten Verdrehwinkel bereitstellt. Die Kupplung arbeitet somit einerseits torsionselastisch (Verdrehschub) mit dem ersten Verdrehwinkel und bei Überlast mit dem zweiten Verdrehwinkel mit Druckbeanspruchung der Nocken wie eine Klauenkupplung. Die hochelastische Kupplung besitzt im unteren Belastungsbereich eine lineare und bei Überlast eine progressive Verdrehkennlinie.

Nach einem Vorschlag der Erfindung sind vorteilhaft vier in Umfangsrichtung gleichmäßig verteilt angeordnete Mitnehmerstege bzw. Flügel vorgesehen, was die Leistungsübertragung bei voller Last und Überlast mit Durchdrehsicherung begünstigt.

Eine vorteilhafte Ausgestaltung der Erfindung sieht vor, dass die zahnartigen Segmente des Drehmomentübertragungsmittels auf einer am Flügelnabenring befestigten Anbauhülse angeordnet sind. Das somit nicht mit dem Flügelnabenring einstückige Drehmomentübertragungsmittel - vorzugsweise ausgebildet als Gummizahnscheibe - ermöglicht durch z.B. eine verschraubte Befestigung einen bei Verschleiß oder zur Veränderung der Drehfedersteife einfachen Austausch nur der Gummizahnscheibe.

Es wird vorgeschlagen, dass das Drehmomentübertragungsmittel und die Nocken aus Gummi bestehen. Eine definierte Befestigung der Nocken an den Mitnehmerstegen mit Ummantelung zumindest an deren radial äußeren Enden lässt sich durch Anvulkanisieren erreichen. Optional ist eine Aufsteck-Bauweise mit Verhakung der Nocken in den Mitnehmerstegen oder in den Taschenendwänden möglich, beispielsweise durch pilzförmige Nocken.

Es kann vorteilhaft vorgesehen werden, dass das Gummimaterial des Drehmomentübertragungsmittels und das der Nocken eine unterschiedliche Härte aufweist. Es lässt sich damit das elastische Verhalten ändern, beispielsweise bei Nocken aus einem weicheren Gummimaterial ein Betriebsverhalten mit mehr Verformung, d.h. einem größeren zweiten Verdrehwinkel erreichen. Der für das Nominaldrehmoment ausschlaggebende erste Verdrehwinkel kann beispielsweise bis etwa 8° und der zweite Verdrehwinkel bis etwa 2° betragen. So kann z.B. bei einer asymmetrischen Kupplungsausführung, wie für den Einsatz an Verbrennungsmotoren, die Belastungsseite - Drehrichtung entweder links oder rechts - besonders weich ausgebildet werden.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: eine erste Ausführung der erfindungsgemäßen Kupplung in einer Vorderansicht;
- Fig. 2: die Kupplung in einem Schnitt entlang der Linie II-II von Fig. 1;
- Fig. 3: eine andere Ausführung der erfindungsgemäßen Kupplung in einer Vorderansicht; und
- Fig. 4: die Kupplung der Fig. 3 in einem Schnitt entlang der Linie IV-IV.

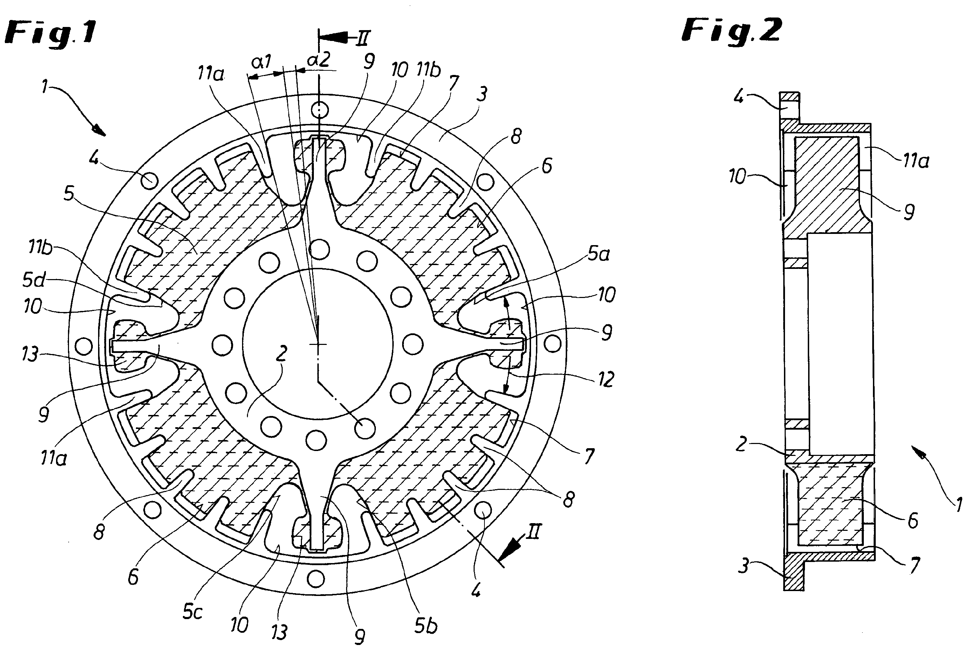

Eine in den Fig. 1 und 2 dargestellte, hochelastische Kupplung 1 umfasst einen Innenring 2 und einen Außenring 3. Der hier als Flansch, optional als Nabenteil, ausgebildete Innenring 2 wird üblich auf der Antriebswelle einer Arbeitsmaschine festgesetzt, während der Außenring 3, hier ausgebildet als motorseitiger, zur Aufnahme von Schrauben mit Bohrungen 4 versehener Flanschanschluss, der Antriebsseite einer Kraftmaschine zugeordnet ist.

Auf dem Innenring 2 ist eine elastische Drehmomentübertragungsscheibe 5 angeordnet, ausgeführt als Gummizahnscheibe, die mit zahnartigen Radialvorsprüngen 6 in Innentaschen 7 des Außenrings 3 eingreift. Die zahnartigen Radialvorsprünge, die etwas mit Luft vor dem Grund der Taschen 7 enden, werden von den sich an ihre Flanken anlegenden Endwänden 8 der Innentaschen 7 eingeschlossen.

Der Innenring 2 ist mit vier in Umfangsrichtung um jeweils 90° zueinander versetzten Mitnehmerstegen bzw. Flügeln 9 ausgebildet, die die elastische Drehmomentübertragungsscheibe 5 in vier Zahnscheibensegmente 5a, b. c. d unterteilen und in Mitnehmerstegtaschen 10 des Außenrings 3 hineinragen. Die Mitnehmerstegtaschen 10 besitzen ein in Umfangsrichtung größeres, von den Endwänden 11a, 11b begrenztes Kammermaß 12.

Die Mitnehmerstege 9 sind an ihren radial äußeren Enden mit einem elastischen Nocken 13 versehen, die bei unbelasteter Kupplung 1, wie in Fig. 1 gezeigt, eine von den Endwänden 11a, 11b der Mitnehmerstegtaschen 10 entfernte Position einnehmen. Zur Übertragung der vollen Antriebsleistung verdrehen sich der Innenring 2 und der Außenring 3 relativ gegeneinander, wobei die Nocken 13 einen ersten Verdrehwinkel α¹ zurücklegen und gegen die in Drehrichtung liegenden Endwände 11a der Mitnehmerstegtaschen 10 anschlagen. Das Anschlagen der Nocken 13 an die Endwände 11a verhindert eine Überlastung der Torsionsbeanspruchung der elastischen Drehmomentübertragungsscheibe 5. Bei auftretender Überlast werden dann die eine hohe Steifigkeit besitzenden Nocken 13 als Pufferelemente an die Übertragungsfähigkeit der Kupplung 1 einbezogen. Denn die auf Druck beanspruchten Nocken 13 verformen sich, was einen zweiten, zusätzlichen Verdrehwinkel α² ermöglicht. Dieser ist abhängig von der gewählten Härte des elastischen Materials bzw. des Gummis für die Nocken 13.

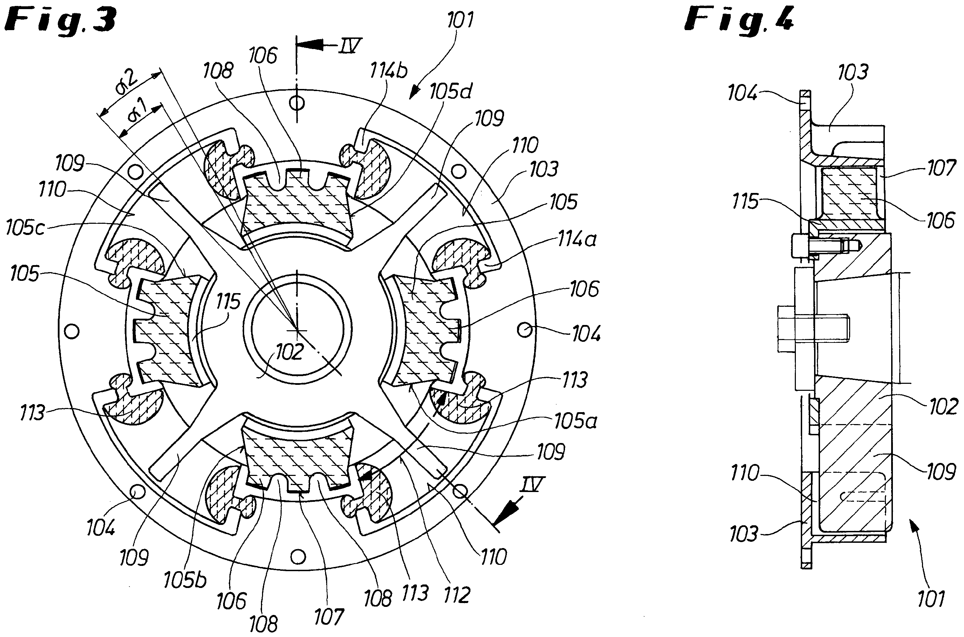

Die in den Fig. 3 und 4 dargestellte Kupplung 101 unterscheidet sich hinsichtlich Funktion und Wirkungsweise nicht von der zuvor beschriebenen Kupplung 1, wie auch der Aufbau weitestgehend damit übereinstimmt. Abweichend ist hier, dass die Nocken113 nicht unmittelbar an den Mitnehmerstegen bzw. Flügeln 109 des Innenrings bzw. Flügelnabenrings 102, sondern in pilzförmiger Gestaltung als Steckbauteil in den Taschenendwänden 114a, 114b der Mitnehmerstegtaschen 110 vorgesehen sind. Die Mitnehmerstege 109 kommen somit in den Dreh-Endlagen, sobald der erste Verdrehwinkel α¹ zurückgelegt worden ist, zur Anlage an den Nocken 113. Die Verformung der Nocken 113 ermöglicht dann den zweiten, zusätzlichen Verdrehwinkel α².

Ein weiterer Unterschied besteht darin, dass das elastische Drehmomentübertragungsmittel 105 mit seinen Zahnscheibensegmenten bzw. Gummisegmenten 105a, b, c, d auf einer Anbauhülse 115 angeordnet bzw. ausgebildet ist. Die Anbauhülse 115 kann mit Schrauben am Flügelnaben- bzw. Innenring 102 befestigt werden (vgl. Fig. 4) und ist damit einfach auszutauschen. In der Einbauposition greifen die zahnartigen Radialvorsprünge 106 der Segmente 105a, b, c, d in die von dem Außenring 103 bereitgestellten Innentaschen 107 ein und werden von Endwänden 108 eingeschlossen.

### Bezugszeichenliste:

- 1, 101: Kupplung
- 2, 102: Innenring/Flügelnabenring
- 3, 103: Außenring
- 4, 104: Bohrung
- 5, 105: elastisches Drehmomentübertragungsmittel/Gummizahnscheibe
- 5a,b,c,d;105a,b,c,d: Segment/Zahnscheibensegment
- 6,106: zahnartiger Radialvorsprung
- 7, 107: Tasche/Innentasche
- 8, 108: Endwand
- 9, 109: Mitnehmersteg/Flügel
- 10, 110: Mitnehmerstegtasche
- 11a, b: Endwand
- 12, 112: Kammermaß
- 13, 113: Nocken
- 114a,b: Taschenendwand
- 115: Anbauhülse
- α¹: erster Verdrehwinkel
- α²: zweiter Verdrehwinkel

## Patentansprüche

1. Elastische Kupplung (1, 101), umfassend einen metallischen Außenring (3, 103) und einen nabenartigen metallischen Innenring (2, 102), wobei ein konzentrisch auf dem Innenring (2, 102) angeordnetes elastisches Drehmomentübertragungsmittel (5, 105) mit zahnartigen Radialvorsprüngen (6, 106) in Innentaschen (7, 107) des Außenrings (3, 103) eingreift, wobei die zahnartigen Radialvorsprünge von den sich an ihre Flanken anlegenden Endwänden (8, 108) der Innentaschen (7, 107) des Außenrings (3, 103) eingeschlossen werden,
**dadurch gekennzeichnet,**
**dass** der Innenring als Flügelnabenring (2, 102) mit mindestens zwei in Umfangsrichtung voneinander beabstandeten, das elastische Drehmomentübertragungsmittel (5, 105) in Segmente (5a, b, c, d, 105a, b, c, d) unterteilende Mitnehmerstegen (9, 109) ausgebildet ist, die in gegenüber den Innentaschen (7, 107) der zahnartigen Radialvorsprünge (6, 106) in Umfangsrichtung mit einem größeren Kammermaß (12, 112) vorgesehene Mitnehmerstegtaschen (10, 110) hineinragen und bei unbelasteter Kupplung (1, 101) eine von den Endwänden (11a, 11b, 114a, 114b) der Mitnehmerstegtaschen (10, 110) entfernte Position einnehmen, wobei den Mitnehmerstegen (9, 109) elastische, in den Dreh-Endlagen zur Wirkung kommende nockenartige Puffermittel (13, 113) zugeordnet sind.

2. Kupplung nach Anspruch 1,
**dadurch gekennzeichnet,**
**dass** vier in Umfangsrichtung gleichmäßig verteilt angeordnete Mitnehmerstege (9, 109) vorgesehen sind.

3. Kupplung nach Anspruch 1 oder 2,
**dadurch gekennzeichnet,**
**dass** die Mitnehmerstege (9) zumindest an ihren radial äußeren Enden mit einem elastischen Nocken (13) als Puffermittel versehen sind.

4. Kupplung nach Anspruch 1 oder 2,
**dadurch gekennzeichnet,**
**dass** als elastische Puffermittel in den die Mitnehmerstegtaschen (109) in Umfangsrichtung begrenzenden Taschenendwänden (114) Nocken (113) vorgesehen sind.

5. Kupplung nach einem der Ansprüche 1 oder 2 und 4,
**dadurch gekennzeichnet,**
**dass** die zahnartigen Segmente (105a, b, c, d) des Drehmomentübertragungsmittels (105) auf einer am Flügelnabenring (102) befestigten Anbauhülse (115) angeordnet sind.

6. Kupplung nach einem der Ansprüche 1 bis 5,
**dadurch gekennzeichnet,**
**dass** das Drehmomentübertragungsmittel (5, 105) und die Nocken (13, 113) aus Gummi bestehen.

7. Kupplung nach Anspruch 6,
**dadurch gekennzeichnet,**
**dass** das Gummimaterial des Drehmomentübertragungsmittels (5, 105) und das der Nocken (13, 113) eine unterschiedliche Härte aufweist.

8. Kupplung nach einem der Ansprüche 1 bis 7,
**dadurch gekennzeichnet,**
**dass** zwischen den Nocken (13) und der in Drehrichtung liegenden Endwand (11a, 11b) der Mitnehmerstegtaschen (10) bzw. zwischen den Nocken (113) der Taschenendwände (114a, 114b) und den Mitnehmerstegen (109) ein erster Verdrehwinkel (α¹) ausgebildet ist, wobei die Nocken (13) zur Übertragung der vollen Antriebsleistung nach zurückgelegtem Verdrehwinkel (α¹) gegen die Endwände (11a) bzw. die Mitnehmerstege (109) gegen die Nocken (113) anschlagen und in dieser Anschlaglage bei auftretender Überlast die Verformung der Nocken (13, 113) einen zweiten Verdrehwinkel (α²) bereitstellt.

## Claims

1. Elastic coupling (1, 101) comprising a metallic outer ring (3, 103) and a hub-like metallic inner ring (2, 102) wherein an elastic torque transmission means (5, 105) with tooth-like radial protrusions (6, 106) concentrically arranged on the inner ring (2, 102) engages in inner pockets (7, 107) of the outer ring (3, 103, wherein the tooth-like radial protrusions are enclosed by the end walls (8, 108) of the inner pockets (7, 107) of the outer ring (3, 103) coming into contact on their flanks,
**characterised in that**
the inner ring is designed as an impeller hub ring (2, 102) with at least two entrainment bars (9, 109) which are at a distance from one another in the circumferential direction and divide the elastic torque transmission means (5, 105) into segments (5a, b, c, d, 105a, b, c, d) and project into entrainment pockets (10, 110) which are provided with a greater chamber dimension (12, 112) in the circumferential direction compared to the inner pockets (7, 107) of the tooth-like radial protrusions (6, 106) and when there is no load on the coupling (1, 101) take up a position away from the end walls (11a, 11b, 114a, 114b) of the entrainment bar pockets (10, 110), wherein assigned to the entrainment bars (9, 109) are elastic hub-like buffer means (13, 113) acting in the rotational end positions.

2. Coupling according to claim 1
**characterised in that**
four entrainment bars (9, 109) are provided arranged evenly distributed in the circumferential direction.

3. Coupling according to claim 1 or 2
**characterised in that**
the entrainment bars (9) are provided with an elastic cam (13) as buffer means on their radial outer ends.

4. Coupling according to claim 1 or 2
**characterised in that** cams (113) are provided as elastic buffer means in the pocket walls (114) delimiting the entrainment bar pockets (109) in the circumferential direction.

5. Coupling according to any one of claims 1 or 2 and 4 **characterised in that** the tooth-like segments (105a, b, c, d) of the torque transmission means (105) are arranged on an add-on sleeve (115) attached to the impeller hub ring (102).

6. Coupling according to any one of claims 1 to 5 **characterised in that**
the torque transmission means (5, 105) and the cams (13, 113) are made of rubber.

7. Coupling according to claim 6
**characterised in that**
the rubber materials of the torque transmission means (5, 105) and that of the cams (13, 113) have a different hardness.

8. Coupling according to any one of claims 1 to 7 **characterised in that**
between the cams (13) and the end wall (11a, 11b) of the entrainment bar pockets (10) lying in the direction of rotation and/or between the cams (113) of the pocket end walls (114a, 114b) and the entrainment bars (109) there is a first twist angle (α¹), wherein the cams (13), in order to transmit the full actuation power after travelling through twist angle (α¹) hit the ends walls (11a) or the entrainment bars (109) hit the cams (113) and in this contact position in the event of occurring overload the deformation of the cams (13, 113) provides a second twist angle (α²).

## Revendications

1. Accouplement élastique (1, 101) comprenant une bague extérieure métallique (3, 103) et une bague intérieure métallique semblable à un moyeu (2, 102), dans lequel un moyen de transmission de couple élastique (5, 105) disposé de façon concentrique sur la bague intérieure (2, 102) se met en prise avec des saillies radiales semblables à des dents (6, 106) dans des poches intérieures (7, 107) de la bague extérieure (3, 103), dans lequel les saillies radiales semblables à des dents sont enfermées par les parois d'extrémité (8, 108), venant reposer contre leurs flancs, des poches intérieures (7, 107) de la bague extérieure (3, 103), **caractérisé en ce que** la bague intérieure est réalisée en tant que bague de moyeu à ailettes (2, 102) avec au moins deux tiges d'entraînement (9, 109) espacées l'une de l'autre en direction circonférentielle, partageant le moyen de transmission de couple élastique (5, 105) en segments (5a, b, c, d, 105a, b, c, d), lesquelles font saillie dans des poches de tige d'entraînement (10, 110) prévues en direction circonférentielle avec une plus grande dimension de logement (12, 112) par rapport aux poches intérieures (7, 107) des saillies radiales semblables à des dents (6, 106) et, en cas d'accouplement non sollicité (1, 101), adoptent une position éloignée des parois d'extrémité (11a, 11b, 114a, 114b) des poches de tige d'entraînement (10, 110), dans lequel on associé aux tiges d'entraînement (9, 109) des moyens tampon semblables à un ergot (13, 113) ayant un effet dans les positions de rotation finales.

2. Accouplement selon la revendication 1, **caractérisé en ce que** quatre tiges d'entraînement (9, 109) disposées de manière régulièrement répartie en direction circonférentielle sont prévues.

3. Accouplement selon la revendication 1 ou 2, **caractérisé en ce que** les tiges d'entraînement (9) sont dotées, au moins au niveau de leurs extrémités extérieures radiales, d'un ergot élastique (13) en tant que moyen tampon.

4. Accouplement selon la revendication 1 ou 2, **caractérisé en ce que** l'on prévoit des ergots (113) en guise de moyens tampon élastiques dans les parois d'extrémité de poche (114) délimitant les poches de tige d'entraînement (109) en direction circonférentielle.

5. Accouplement selon l'une des revendications 1 ou 2 et 4, **caractérisé en ce que** les segments semblables à des dents (105a, b, c, d) du moyen de transmission de couple (105) sont disposés sur une douille de montage (115) fixée sur la bague de moyeu à ailettes (102).

6. Accouplement selon l'une des revendications 1 à 5, **caractérisé en ce que** le moyen de transmission de couple (5, 105) et les ergots (13, 113) se composent de caoutchouc.

7. Accouplement selon la revendication 6, **caractérisé en ce que** le matériau en caoutchouc du moyen de transmission de couple (5, 105) et celui des ergots (13, 113) présente une dureté différente.

8. Accouplement selon l'une des revendications 1 à 7, **caractérisé en ce que**,
entre les ergots (13) et la paroi d'extrémité (11a, 11b) située en direction de rotation des poches de tige d'entraînement (10) ou entre les ergots (113) des parois d'extrémité de poche (114a, 114b) et les tiges d'entraînement (109) un premier angle de torsion (α¹) est formé, dans lequel, pour la transmission de la pleine puissance motrice, après avoir parcouru l'angle de torsion (α¹), les ergots (13) arrivent en butée contre les parois d'extrémité (11a), ou les tiges d'entraînement (109) arrivent en butée contre les ergots (113), et dans cette position de butée, avec l'apparition d'une surcharge, la déformation des ergots (13, 113) met à disposition un deuxième angle de torsion (α²).
